# EUROPEAN PATENT APPLICATION

(11) **EP 4 628 209 A1**
(43) Date of publication of application: **08.10.2025**
(21) Application number: 23916178.9
(22) Date of filing: 06.12.2023
(51) Int. Cl.: B01J 29/84, B01D 53/94, B01J 35/57, F01N 3/10, F01N 3/28

(54) **EXHAUST GAS PURIFICATION CATALYST**

(30) Priority: 13.01.2023 JP 2023003477
(71) Applicant: CATALER CORPORATION, Kakegawa-shi, Shizuoka 437-1492 (JP)
(72) Inventor: KAWAKAMI, Yuki, Kakegawa-shi, Shizuoka 437-1492 (JP); SUGIOKA, Daisuke, Kakegawa-shi, Shizuoka 437-1492 (JP); CHIBA, Akiya, Kakegawa-shi, Shizuoka 437-1492 (JP)
(74) Representative: Kramer Barske Schmidtchen Patentanwälte PartG mbB
(86) International application number: PCT/JP2023/043554
(87) International publication number: WO 2024/150563

(57) **Abstract**

The present invention can provide an exhaust gas purification catalyst showing high NH₃ purification performance at cold start after hydrothermal endurance. The exhaust gas purification catalyst disclosed here includes a base material, and an exhaust gas purification layer located on the base material. The exhaust gas purification layer includes a molecular sieve containing substantially no Si, and a catalytic metal. The molecular sieve containing substantially no Si is metalloaluminophosphate whose framework is partially substituted by a metal other than Al.

## Description

### [Technical Field]

The present invention relates to an exhaust gas purification catalyst. This application claims the benefit of priority to Japanese Patent Application No. 2023-003477 filed on January 13, 2023. The entire contents of this application are hereby incorporated herein by reference.

### [Background Art]

An exhaust gas emitted from a gasoline engine of an automobile or the like contains harmful components such as hydrocarbon (HC), carbon monoxide (CO), and nitrogen oxide (NOx). In order to efficiently remove these harmful components from the exhaust gas by reaction, exhaust gas purification catalysts have been employed to date.

In order to improve HC removal performance at cold start of a gasoline engine, a technique of using a HC adsorbent such as a molecular sieve in an exhaust gas purification catalyst is known (see, for example, Patent Documents 1 and 2). On the other hand, exhaust gas regulations have been increasingly strengthened in recent years, and there is a growing demand for reducing NH₃ emissions from gasoline engine vehicles. NH₃ is a component that can be generated by over-reduction of NOx with an exhaust gas purification catalyst. It is known that molecular sieves also function as NH₃ adsorbents (see, for example, Patent Document 3).

### [Citation List]

### [Patent Document]

[Patent Document 1] Japanese Patent Application Publication No. 2004-116331
[Patent Document 2] Japanese Patent Application Publication No. 2009-167973
[Patent Document 3] Japanese Patent Application Publication No. 2020-34001

### [Summary of Invention]

### [Technical Problem]

However, as a result of an intensive study, inventors of the present invention found that when a conventional molecular sieve is used as an NH₃ adsorbent in order to reduce NH₃ emission from a gasoline engine vehicle, there is a problem that NH₃ purification performance at cold start after long-term exposure to a water-containing high-temperature exhaust gas (hereinafter referred to as "after hydrothermal endurance") is low.

It is therefore an object of the present invention to provide an exhaust gas purification catalyst exhibiting high NH₃ purification performance at cold start after hydrothermal endurance.

### [Solution to Problem]

Through an intensive study, the inventors of the present invention found that in the case of using zeolite as an adsorbent in an exhaust gas purification catalyst, Si included in zeolite (aluminosilicate salt) migrates after hydrothermal endurance to harmfully affect a precious metal that is a catalytic metal, and this deteriorates NH₃ purification performance. The inventors also found that even in the case of using an aluminophosphate molecular sieve containing no Si as an adsorbent in an exhaust gas purification catalyst, NH₃ purification performance at cold start is still insufficient. On the other hand, through a further intensive study, the inventors found that when a framework of the aluminophosphate molecular sieve is partially substituted by a metal, NH₃ adsorbability is enhanced, and NH₃ purification performance at cold start can be significantly enhanced.

Specifically, an exhaust gas purification catalyst disclosed here [1] includes: a base material; and an exhaust gas purification layer located on the base material. The exhaust gas purification layer includes a molecular sieve containing substantially no Si, and a catalytic metal. The molecular sieve containing substantially no Si is metalloaluminophosphate whose framework is partially substituted by a metal other than Al. This configuration can provide an exhaust gas purification catalyst showing high NH₃ purification performance at cold start after hydrothermal endurance.

In an exhaust gas purification catalyst disclosed here [2], in the exhaust gas purification catalyst [1], the metal substituting the framework of metalloaluminophosphate is at least one selected from the group consisting of Zr, Zn, Co, and Ti. This configuration is advantageous in the NH₃ purification performance of the exhaust gas purification catalyst.

In an exhaust gas purification catalyst disclosed here [3], in the exhaust gas purification catalyst [1], the metal substituting the framework of the metalloaluminophosphate is Co. This configuration can especially enhance the NH₃ purification performance of the exhaust gas purification catalyst.

In an exhaust gas purification catalyst disclosed here [4], in any one of the exhaust gas purification catalysts [1] to [3], the exhaust gas purification layer includes a NH₃ adsorption layer including the molecular sieve containing substantially no Si, and a catalyst layer including the catalytic metal. This configuration is advantageous in the NH₃ purification performance of the exhaust gas purification catalyst.

In an exhaust gas purification catalyst body disclosed here [5], in the exhaust gas purification catalyst [4], the NH₃ adsorption layer and the catalyst layer are stacked, and the NH₃ adsorption layer is located closer to the base material than the catalyst layer. This configuration is especially advantageous in the NH₃ purification performance of the exhaust gas purification catalyst.

In an exhaust gas purification catalyst body disclosed here [6], in the exhaust gas purification catalyst [4], the exhaust gas purification layer includes a front portion, and a rear portion located downstream of the front portion in a flow direction of an exhaust gas, the NH₃ adsorption layer constitutes the front portion, and the catalyst layer constitutes the rear portion. This configuration is especially advantageous in the NH₃ purification performance of the exhaust gas purification catalyst.

In an exhaust gas purification catalyst body disclosed here [7], in any one of the exhaust gas purification catalysts [1] to [6], the exhaust gas purification catalyst is used for purifying an exhaust gas of a gasoline engine. This configuration can reduce NH₃ emission from the gasoline engine.

### [Brief Description of Drawings]

[FIG. 1] A schematic view illustrating an exhaust gas purification system according to a first embodiment.
[FIG. 2] A perspective view schematically illustrating the exhaust gas purification catalyst in FIG. 1.
[FIG. 3] A partial cross-sectional view of the exhaust gas purification catalyst in FIG. 1 taken along a cylinder axis direction.
[FIG. 4] A partial cross-sectional view illustrating a configuration of a variation of the exhaust gas purification catalyst in FIG. 1.
[FIG. 5] A partial cross-sectional view of an exhaust gas purification catalyst according to a second embodiment taken along cylinder axis directions.
[FIG. 6] A partial cross-sectional view of an exhaust gas purification catalyst according to a third embodiment taken along cylinder axis directions.
[FIG. 7] A graph showing NH₃ 50% purification temperatures after a hydrothermal endurance treatment in examples and comparative examples.
[FIG. 8] A graph showing HC 50% purification temperatures after a hydrothermal endurance treatment in examples and Comparative Example 1.

### [Description of Embodiments]

### [FIRST EMBODIMENT]

A preferred embodiment of the present invention will be described hereinafter with reference to the drawings. Matters not specifically mentioned in the description but required for carrying out the present invention can be understood as matters of design of a person skilled in the art based on related art in the field. The present invention can be carried out on the basis of the contents disclosed in the description and common general knowledge in the field. In the drawings, members and parts having the same functions are denoted by the same reference characters, and description will not be repeated or will be simplified. Dimensional relationships (e.g., length, width, and thickness) in the drawings do not necessarily reflect actual dimensional relationships. The expression "A to B" (where A and B are any numerical values) representing a range herein includes "preferably greater than A" and "preferably less than B" as well as "A or more and B or less."

### <<Exhaust Gas Purification System>>

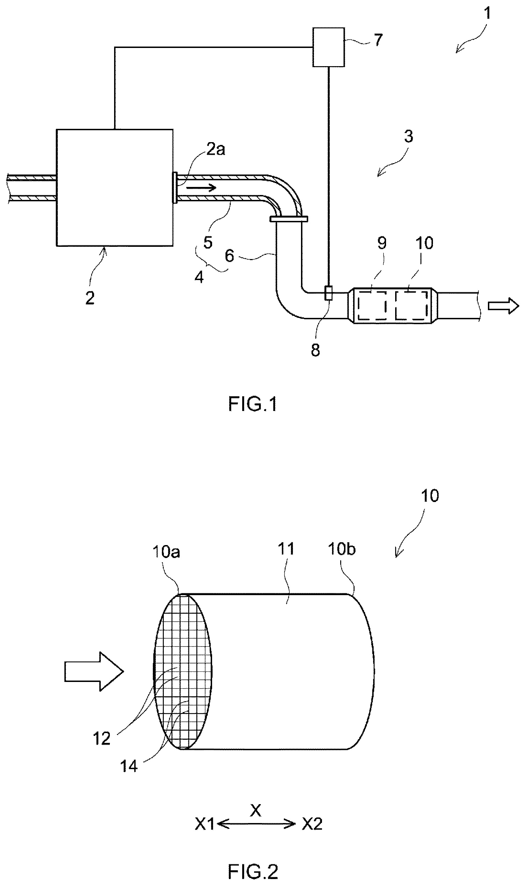

FIG. 1 is a schematic view of an exhaust gas purification system 1. The exhaust gas purification system 1 includes an internal combustion engine (engine) 2, an exhaust gas purification device 3, and an engine control unit (ECU) 7. The exhaust gas purification system 1 is configured to purify harmful components, such as HC, CO, NOx, and NH₃, included in an exhaust gas emitted from the internal combustion engine 2 by the exhaust gas purification device 3. Arrows in FIG. 1 indicate a flow direction of an exhaust gas. In the following description, a side near the internal combustion engine 2 along the flow of the exhaust gas will be referred to as an upstream side, and a side away from the internal combustion engine 2 will be referred to as a downstream side.

The internal combustion engine 2 herein is mainly constituted by a gasoline engine of a gasoline vehicle. The internal combustion engine 2 may be an engine other than a gasoline engine, for example, an engine mounted on a diesel engine or a hybrid vehicle. The internal combustion engine 2 includes a combustion chamber (not shown). The combustion chamber is connected to a fuel tank (not shown). The fuel tank herein stores gasoline in this embodiment. Fuel stored in the fuel tank may be a diesel fuel (gas oil), for example. In the combustion chamber, fuel supplied from the fuel tank is mixed with oxygen and is burnt. Accordingly, combustion energy is converted to mechanical energy. The combustion chamber communicates with an exhaust port 2a. The exhaust port 2a communicates with the exhaust gas purification device 3. The burnt fuel gas is emitted to the exhaust gas purification device 3 as an exhaust gas.

The exhaust gas purification device 3 includes an exhaust passage 4 communicating with the internal combustion engine 2, a pressure sensor 8, a first catalyst 9, and a second catalyst 10. The exhaust passage 4 is an exhaust gas passage in which an exhaust gas flows. The exhaust passage 4 herein includes an exhaust manifold 5 and an exhaust pipe 6 in this embodiment. The upstream end of the exhaust manifold 5 is coupled to the exhaust port 2a of the internal combustion engine 2. The downstream end of the exhaust manifold 5 is coupled to the exhaust pipe 6. The first catalyst 9 and the second catalyst 10 are disposed in this order from the upstream side in an intermediate portion of the exhaust pipe 6. The positions of the first catalyst 9 and the second catalyst 10 may be changed in any manner. The numbers of the first catalyst 9 and the second catalyst 10 are not particularly limited, and a plurality of first catalysts 9 and a plurality of second catalysts 10 may be provided. A third catalyst may also be provided downstream of the second catalyst 10.

The first catalyst 9 may be the same as or similar to a conventional catalyst and is not particularly limited. Examples of the first catalyst 9 include: a diesel particulate filter (DPF) that removes PM included in an exhaust gas; a diesel oxidation catalyst (DOC) that purifies HC and CO included in an exhaust gas; a three-way catalyst that purifies HC, CO, and NOx included in an exhaust gas at the same time; and an NOx storage-reduction (NSR) catalyst that stores NOx in the normal driving (in a lean condition) and purifies NOx using HC or CO as a reducing agent when more fuel is injected (in a rich atmosphere). The first catalyst 9 may have the function of increasing the temperature of an exhaust gas that is to flow into the second catalyst 10, for example. It should be noted that the first catalyst 9 is not an essential component, and may be omitted in other embodiments.

The second catalyst 10 has the function of purifying harmful components (especially NH₃) in an exhaust gas. The second catalyst 10 herein is a three-way catalyst in this embodiment. The second catalyst 10 is an example of an exhaust gas purification catalyst disclosed here. It should be noted that the second catalyst 10 will also be referred to as an "exhaust gas purification catalyst" hereinafter. A configuration of the second catalyst (exhaust gas purification catalyst) 10 will be described in detail later.

The ECU 7 controls the internal combustion engine 2 and the exhaust gas purification device 3. The ECU 7 is electrically connected to the internal combustion engine 2 and sensors (e.g., the pressure sensor 8, a temperature sensor, and an oxygen sensor) disposed in each portion of the exhaust gas purification device 3. A configuration of the ECU 7 may be the same as or similar to a conventional configuration, and is not particularly limited. The ECU 7 is a processor or an integrated circuit, for example. The ECU 7 includes an input port (not shown) and an output port (not shown). The ECU 7 receives, for example, information such as an operating state of a vehicle and the amount, temperature, and pressure of an exhaust gas emitted from the internal combustion engine 2. The ECU 7 receives information detected by sensors (e.g., pressure measured by the pressure sensor 8) through the input port. Based on the received information, for example, the ECU 7 transmits a control signal through the output port. The ECU 7 controls operations such as fuel injection control, ignition control, and intake air amount adjustment control of the internal combustion engine 2, for example. Based on the operating state of the internal combustion engine 2 and the amount of an exhaust gas from the internal combustion engine 2, and the like, the ECU 7 controls driving and stop of the exhaust gas purification device 3.

### <<Exhaust Gas Purification Catalyst>>

FIG. 2 is a perspective view schematically illustrating the exhaust gas purification catalyst 10. It should be noted that the arrow in FIG. 2 indicates a flow direction of an exhaust gas. In FIG. 2, the upstream side of the exhaust passage 4 relatively close to the internal combustion engine 2 is shown at the left, and the downstream side of the exhaust passage relatively far from the internal combustion engine 2 is shown at the right. In FIG. 2, character X denotes cylinder axis directions of the exhaust gas purification catalyst 10. The exhaust gas purification catalyst 10 is disposed in the exhaust passage 4 such that the cylinder axis directions X extend along a flow direction of an exhaust gas. The cylinder axis directions X are along the flow direction of the exhaust gas. In the following description, one direction X1 of the cylinder axis directions X will also be hereinafter referred to as a direction toward the upstream side (also referred to as an exhaust gas inflow side or a front side), and the other direction X2 of the cylinder axis directions X will also be hereinafter referred to as a direction toward the downstream side (also referred to as an exhaust gas outflow side or a rear side). It should be noted that these directions are defined merely for convenience of description, and do not limit to the state of installation of the exhaust gas purification catalyst 10.

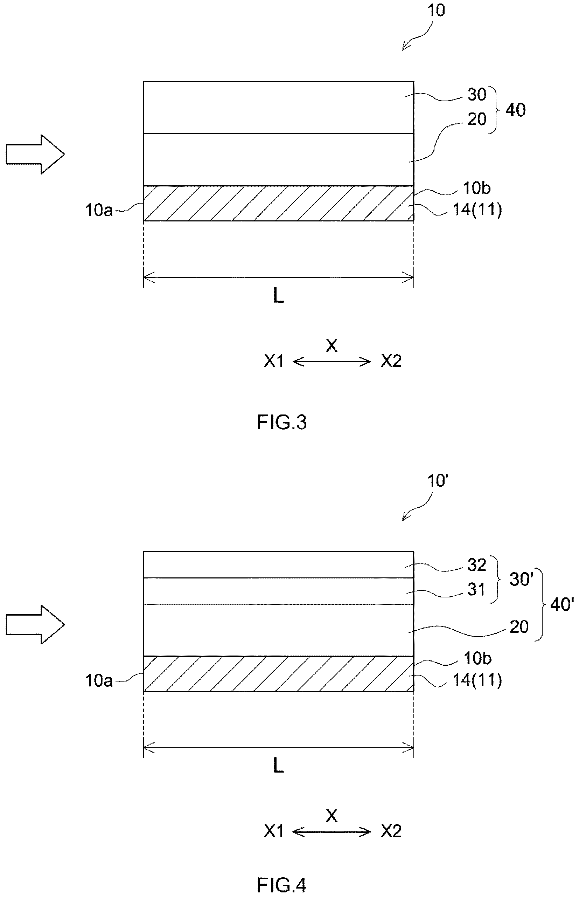

As illustrated in FIG. 3, the exhaust gas purification catalyst 10 includes a base material 11 having a straight flow structure, and an exhaust gas purification layer 40. An end of the exhaust gas purification catalyst 10 in the direction X1 is an inlet 10a of an exhaust gas, and the other end in the direction X2 is an outlet 10b of the exhaust gas. The exhaust gas purification catalyst 10 has a cylindrical outer shape in this embodiment. The outer shape of the exhaust gas purification catalyst 10 is not particularly limited, and may be, for example, an oval cylindrical shape, a polygon cylindrical shape, a pipe shape, a foam shape, a pellet shape, or a fiber shape.

The base material 11 constitutes a frame of the exhaust gas purification catalyst 10. The base material 11 is not particularly limited, and may be any material and mode conventionally used for this type of application. The base material 11 may be, for example, a ceramic substrate composed of ceramics such as cordierite, aluminum titanate, or silicon carbide, or may be a metal substrate composed of stainless steel (SUS), a Fe-Cr-Al-based alloy, or a Ni-Cr-Al-based alloy. As illustrated in FIG. 2, the base material 11 has a honeycomb structure in this embodiment. The base material 11 includes a plurality of cells (cavities) 12 regularly arranged along the cylinder axis directions X, and partitions (ribs) 14 partitioning the plurality of cells 12. The volume of the base material 11 (apparent volume including the volume of the cells 12) may be, but is not limited to, approximately 0.1 to 10 L, and 0.5 to 5 L, for example. The average length (overall length) L of the base material 11 along the cylinder axis directions X may be approximately 10 to 500 mm, and 50 to 300 mm, for example.

The cells 12 serve as channels of an exhaust gas. The cells 12 extend along the cylinder axis directions X. The cells 12 are through holes penetrating the base material 11 along the cylinder axis directions X. The shape, size, number, for example, of the cells 12 may be designed in consideration of, for example, the flow rate and components of an exhaust gas flowing in the exhaust gas purification catalyst 10. The shape of a cross section of the cells 12 orthogonal to the cylinder axis directions X is not particularly limited. Examples of the cross-sectional shape of each cell 12 include quadrangles such as squares, parallelograms, rectangles, and trapezoids, other polygons (e.g., triangles, hexagons, and octagons), and various geometric shapes such as waveforms and circles. The partitions 14 face the cells 12 and partition adjacent cells 12. The average thickness (dimension orthogonal to the surface, the same hereinafter) of the partitions 14 may be, but is not limited to, approximately 0.1 to 10 mil (where 1 mil is about 25.4 µm), and 0.2 to 5 mil, for example, from the viewpoints of increasing mechanical strength and reducing a pressure loss, for example. The partitions 14 may be porous to allow an exhaust gas to pass therethrough.

FIG. 3 is a partial cross-sectional view schematically illustrating a portion of a cross section of the exhaust gas purification catalyst 10 taken along the cylinder axis directions X. As illustrated in FIG. 3, the exhaust gas purification layer 40 is located on the base material 11, and the exhaust gas purification layer 40 includes a NH₃ adsorption layer 20 and a catalyst layer 30. Thus, the NH₃ adsorption layer 20 and the catalyst layer 30 are stacked on the base material 11. In this manner, the exhaust gas purification layer 40 is constituted by layers concerning purification of an exhaust gas.

The NH₃ adsorption layer 20 is located closer to the base material 11 (i.e., on the lower layer side) than the catalyst layer 30. With this arrangement, when NH₃ adsorbed by the NH₃ adsorption layer 20 is desorbed from the NH₃ adsorption layer 20, this NH₃ can be efficiently removed by the catalyst layer 30.

The exhaust gas purification layer 40 includes a molecular sieve containing substantially no Si, and a catalytic metal. In this embodiment, in the exhaust gas purification layer 40, the NH₃ adsorption layer 20 includes the molecular sieve containing substantially no Si, and the catalyst layer 30 includes the catalytic metal.

The molecular sieve containing substantially no Si and included in the NH₃ adsorption layer 20 functions as a NH₃ adsorbent. Thus, the molecular sieve containing substantially no Si functions to adsorb NH₃ at temperatures at which the catalytic metal is not sufficiently activated, and to desorb NH₃ at temperatures at which the catalytic metal is sufficiently activated. The expression "a molecular sieve includes substantially no Si" herein means that a proportion of Si atoms to all the atoms constituting a molecular sieve is 6 atom% or less (preferably 3 atom% or less, more preferably 1 atom% or less, even more preferably 0 atom%). Thus, for example, Si is allowed to be contained in a molecular sieve by movement of Si, inevitable impurities, and other reasons. It should be noted that a proportion of Si atoms to all the atoms constituting a molecular sieve can be determined by X-ray fluorescence analysis (XRF).

In this embodiment, as the molecular sieve containing substantially no Si, metalloaluminophosphate (hereinafter also referred to as "MeAPO") whose framework is partially substituted by a metal other than Al is used. That is, a molecular sieve in which a portion of a framework of an aluminophosphate (ALPO) molecular sieve is substituted by a metal other than Al is used. Since constituent elements of the framework are substituted by a metal, the molecular sieve used in this embodiment is different from a metal-containing (metal-supported) molecular sieve in which a supported metal is ion-exchanged.

The MeAPO molecular sieve contains substantially no Si, and a SiO₂/Al₂O₃ ratio (mole ratio) of the MeAPO molecular sieve is preferably less than 1, more preferably 0.5 or less, even more preferably 0.1 or less, most preferably zero. The MeAPO molecular sieve used here contains substantially no Si, and thus, are different from aluminophosphate-based zeolite with an increased content of Al₂O₃ relative to SiO₂ (note even low silica zeolite has a SiO₂/Al₂O₃ ratio of generally 1 or more). It should be noted that the SiO₂/Al₂O₃ ratio can be determined by X-ray fluorescence analysis (XRF).

The MeAPO molecular sieve can have a framework structure that is the same as, similar to, or different from, that of zeolite. Examples of the framework structure of the MeAPO molecular sieve include AEI, AEL, AEN, AET, AFI, AFN, AFO, AFR, AFS, AFT, AFY, ANA, APC, APD, AST, ATO, ATS, ATT, ATV, AVE, AVL, AWO, AWW, CHA, DFO, ERI, LEV, SBS, SBE, SBT, SOD, VFI, and ZON, as a framework code defined by International Zeolite Association (IZA). The framework structure is preferably AFI.

The type of a metal substituting the framework of MeAPO (hereinafter also referred to as a "framework substitution metal") is not particularly limited as long as the metal is other than Al. From the viewpoint of ease in producing the MeAPO molecular sieve, the metal may be at least one selected from the group consisting of Zr, Zn, Co, and Ti. Larger amounts of the framework substitution metal in the MeAPO molecular sieve are advantageous because the framework substitution metal provides a larger number of NH₃ adsorption sites. In view of this, the framework substitution metal is preferably Co and Zr, more preferably Co, from the viewpoint of ease of introduction into the framework of the MeAPO molecular sieve (i.e., from the viewpoint of obtaining the exhaust gas purification catalyst 10 having especially high NH₃ purification performance). On the other hand, from the viewpoint of obtaining the exhaust gas purification catalyst 10 having especially high HC purification performance, Co and Zn are preferable, and Co is more preferable.

The amount of substitution of the MeAPO framework by the framework substitution metal is not particularly limited. As the ratio of the number of atoms represented by the framework substitution metal (Me)/(Al + P) increases, NH₃ purification performance is enhanced. In view of this, the ratio of the number of atoms represented by the Me/(Al + P) is, for example, 0.0001 or more, preferably 0.0010 or more, more preferably 0.010 or more, even more preferably 0.015 or more, still more preferably 0.020 or more. On the other hand, the ratio of the number of atoms represented by Me/(Al + P) is defined by technical limitations, and can be, for example, 0.30 or less, 0.10 or less, or 0.030 or less.

MeAPO can be obtained by synthesis according to a known method (see, for example, an article by Morten et al. in ChemPhysChem, 2018, Vol. 19, Issue 4, pp. 484-495).

In this embodiment, the use of the MeAPO molecular sieve that is a molecular sieve containing substantially no Si as the NH₃ adsorbent can significantly enhance NH₃ purification performance of the exhaust gas purification catalyst 10 at cold start after hydrothermal endurance. This is because of the following reasons.

Zeolite is conventionally known as a molecular sieve for use as an adsorbent of harmful components (especially HC) of an exhaust gas. Zeolite is a crystalline aluminosilicate serving as a molecular sieve, and thus, contains Si and Al. The findings obtained by the study of the inventors show that when a hydrothermal endurance treatment is performed on a catalyst layer including zeolite, Si contained in zeolite migrates to harmfully affect a catalytic metal, which degrades exhaust gas purification performance at cold start. This is considered to be because SiO₂ contained in zeolite is reduced to SiO in a high-temperature reduction atmosphere, and interfacial movement and evaporation in the form of SiOx occur. It is also considered to be because of poisoning by interaction between Si and the precious metal.

In view of this, in this embodiment, the molecular sieve containing substantially no Si is used as a NH₃ adsorbent to solve problems caused by movement of Si, and consequently, can enhance NH₃ purification performance of the exhaust gas purification catalyst 10 at cold start after hydrothermal endurance.

On the other hand, an ALPO molecular sieve is known as a molecular sieve for harmful components of an exhaust gas. The ALPO molecular sieve is a molecular sieve containing substantially no Si. However, the finding of the inventors of the present invention shows that even the ALPO molecular sieve is insufficient in NH₃ purification performance at cold start after hydrothermal endurance. In view of this, according to this embodiment, the framework of the ALPO molecular sieve is partially substituted by a metal to enhance NH₃ adsorbability. As a result, NH₃ purification performance of the exhaust gas purification catalyst 10 at cold start after hydrothermal endurance can be further enhanced.

In addition, exhaust gas regulations have been increasingly strengthened, and there is a growing demand for further reducing NH₃ emissions from gasoline engine vehicles. A MeAPO molecular sieve can also serve as a HC adsorbent. Thus, the exhaust gas purification catalyst 10 according to this embodiment can purify HC in an exhaust gas highly efficiently, and exhibits high HC purification performance even after hydrothermal endurance.

In this embodiment, the NH₃ adsorption layer 20 may include a NH₃ adsorbent (e.g., a molecular sieve such as zeolite or ALPO) other than the MeAPO molecular sieve. In the NH₃ adsorption layer 20, typically more than 50 mass%, preferably 80 mass% or more, more preferably 90 mass% or more, even more preferably 100 mass%, of all the NH₃ adsorbent is the MeAPO molecular sieve.

The amount of the MeAPO molecular sieve in the exhaust gas purification catalyst 10 is not particularly limited, and may be appropriately designed in consideration of the size of the cells 12 of the base material 11, a flow rate of an exhaust gas distributed in the exhaust gas purification catalyst 10, and others. The amount of the MeAPO molecular sieve per 1 L of volume of the base material 11 may be, for example, 1 g/L or more, 5 g/L or more, 10 g/L or more, 15 g/L or more, or 20 g/L or more, and may be, for example, 200 g/L or less, 150 g/L or less, 100 g/L or less, 80 g/L or less, 60 g/L or less, 50 g/L or less, or 40 g/L or less.

It should be noted that the expression "per 1 L of volume of the base material" refers to per 1 L of total bulk volume including a net volume of the base material and a volume of a cell passage. The term (g/L) in the following description refers to an amount included in 1 L of volume of the base material.

The NH₃ adsorption layer 20 can include a component other than the NH₃ adsorbent as optional components. Examples of the optional components of the NH₃ adsorption layer 20 include binders such as alumina sol and silica sol, and various additives.

As the other optional components, the NH₃ adsorption layer 20 may include a material having an oxygen storage capacity (oxygen absorbing/releasing material: so-called an OSC material) and a material having no oxygen storage capacity (non-oxygen absorbing/releasing material: so-called a non-OSC material). Examples of the OSC material and the non-OSC material are the same as or similar to those of an OSC material and a non-OSC material included in the catalyst layer 30 described later.

The contents of the OSC material and the non-OSC material included in the NH₃ adsorption layer 20 are not particularly limited. As the amount of the NH₃ adsorbent in the NH₃ adsorption layer 20 increases, a larger amount of NH₃ can be adsorbed. Thus, the content of each of the OSC material and the non-OSC material in the NH₃ adsorption layer 20 is preferably 40 mass% or less, more preferably 20 mass% or less.

On the other hand, since the exhaust gas purification catalyst 10 includes the catalyst layer 30, the NH₃ adsorption layer 20 generally does not include a catalytic metal.

In one preferred embodiment, the NH₃ adsorption layer 20 consists only of a MeAPO molecular sieve and a binder component.

A portion of the NH₃ adsorption layer 20 may have a composition different from that of another portion of the NH₃ adsorption layer 20. For example, an upstream X1 portion (front portion) and a downstream X2 portion (rear portion) of the NH₃ adsorption layer 20 in the cylinder axis directions X may have different compositions. Specifically, for example, the upstream X1 portion (front portion) and the downstream X2 portion (rear portion) of the NH₃ adsorption layer 20 in the cylinder axis directions X may include MeAPO molecular sieves with different framework structures or may include MeAPO molecular sieves whose frameworks are substituted by different metals.

The coating amount (i.e., formation amount) of the NH₃ adsorption layer 20 is not particularly limited. This coating amount is, for example, 3 to 200 g/L and may be 10 to 100 g/L per 1 L of volume of a portion of the base material in which the NH₃ adsorption layer 20 is formed along the cylinder axis directions X. When the range described above is satisfied, enhancement of purification performance of harmful components and reduction of a pressure loss can be achieved at high level. In addition, durability and resistance to peeling can be enhanced.

The thickness of the NH₃ adsorption layer 20 is not particularly limited, and may be appropriately designed in consideration of durability, resistance to peeling, and others. The thickness of the NH₃ adsorption layer 20 is, for example, 1 to 100 µm and may be 5 to 100 µm.

The coating width (average length) of the NH₃ adsorption layer 20 in the cylinder axis directions X is not particularly limited. Since NH₃ purification performance increases as the coating width increases, the coating width is, for example, 20% or more, preferably 50% or more, more preferably 80% or more, even more preferably 90% or more of the overall length L of the base material 11, and may be equal to the length of the overall length L of the base material 11.

The catalyst layer 30 is a reaction field for purifying harmful components in an exhaust gas. The catalyst layer 30 is a porous body having a large number of pores (voids). An exhaust gas that has flowed into the exhaust gas purification catalyst 10 is brought into contact with the catalyst layer 30 while flowing in channels (cells 12) in the exhaust gas purification catalyst 10. Accordingly, harmful components in the exhaust gas are purified. For example, HC and CO included in the exhaust gas are oxidized by the catalyst layer 30 and converted (purified) to, for example, water and carbon dioxide. For example, NOx included in the exhaust gas is reduced by the catalyst layer 30 and converted (purified) to nitrogen. Then, NH₃ included in the exhaust gas is oxidized by the catalyst layer 30 and converted (purified) to nitrogen and water.

The catalyst layer 30 includes at least a catalytic metal as an essential component. As the catalytic metal, various metal species that can function as oxidation catalysts or reduction catalysts in purification of harmful components may be used. Typical examples of the catalytic metal include a platinum group, that is, rhodium (Rh), palladium (Pd), platinum (Pt), ruthenium (Ru), osmium (Os), and iridium (Ir). Instead of, or in addition to, the platinum group, other metal species may be used. For example, metal species such as iron (Fe), cobalt (Co), nickel (Ni), copper (Cu), silver (Ag), and gold (Au) may be used. Alternatively, an alloy of two or more of these metals may be used. As the catalytic metal, an oxidation catalyst (e.g., at least one of Pd and Pt) having high oxidation activity and reduction catalyst (e.g., Rh) having high reduction activity are preferable, and a combination of two or more types of these catalysts is especially preferable. The oxidation catalyst and the reduction catalyst may be present in the same (single) catalyst layer or in separate catalyst layers.

The catalytic metal is preferably used as fine particles having a sufficiently small particle size from the viewpoint of increasing a contact area with an exhaust gas. An average particle size of the catalytic metal (specifically, an average of sizes of 50 or more particles of a catalytic metal obtained by transmission electron microscope (TEM) observation) is approximately 1 to 15 nm, for example, 10 nm or less, preferably 5 nm or less.

The amount of the catalytic metal in the exhaust gas purification catalyst 10 is not particularly limited, and may be appropriately determined depending on the type of the catalytic metal, and the like. From the viewpoint of especially high exhaust gas purification performance, the amount of the catalytic metal per 1 L of volume of the base material 11 may be, for example, 0.01 g/L or more, 0.03 g/L or more, 0.05 g/L or more, 0.08 g/L or more, or 0.10 g/L or more. From the viewpoint of balance between exhaust gas purification performance and cost, the amount may be, for example, 15.00 g/L or less, 10.00 g/L or less, 5.00 g/L or less, 3.00 g/L or less, 1.50 g/L or less, 1.00 g/L or less, 0.80 g/L or less, or 0.50 g/L or less.

The catalytic metal is generally supported on a carrier. Thus, the catalyst layer 30 may further include a carrier that supports a catalytic metal.

As a carrier supporting the catalytic metal, a known material used as a carrier of a catalytic metal of an exhaust gas purification catalyst can be used. The carrier is typically an inorganic porous body. Examples of the carrier include: materials having no oxygen storage capacity (non-OSC materials) such as aluminium oxide (Al₂O₃, alumina), titanium oxide (TiO₂, titania), zirconium oxide (ZrO₂, zirconia), and silicon oxide (SiO₂, silica); and materials having oxygen storage capacity (OSC materials) such as ceria (CeO₂) and composite oxides including ceria. The carrier may be any of a non-OSC material and an OSC material and may be both.

In order to enhance heat resistance and other properties, an oxide used as a non-OSC material may be supplemented with a small amount (e.g., 1 mass% or more and 10 mass% or less) of an oxide of a rare-earth element such as Pr₂O₃, Nd₂O₃, La₂O₃, or Y₂O₃. From the viewpoint of especially high heat resistance and durability, the non-OSC material is preferably Al₂O₃, more preferably Al₂O₃ compounded with La₂O₃ (La₂O₃-Al₂O₃ composite oxide: LA composite oxide).

Concerning the OSC material, examples of the composite oxide containing ceria include a composite oxide containing ceria and zirconia (ceria-zirconia composite oxide, so-called CZ composite oxide or ZC composite oxide). In a case where the OSC material contains zirconium oxide, thermal degradation of cerium oxide can be suppressed, and thus, the OSC material is preferably a ceria-zirconia composite oxide.

The OSC material may contain an oxide of a rare-earth element in order to enhance properties (especially heat resistance, oxygen storage/release property, and the like). Examples of the rare-earth element include Sc, Y, La, Pr, Nd, Pm, Sm, Eu, Gd, Tb, Dy, Ho, Er, Tm, Yb, and Lu. Preferred examples of an oxide of the rare-earth element include Pr₂O₃, Nd₂O₃, La₂O₃, and Y₂O₃.

In a case where the OSC material is a composite oxide including cerium oxide, from the viewpoint of sufficiently exhibiting oxygen storage capacity thereof, the content of cerium oxide in the composite oxide is preferably 15 mass% or more, more preferably 20 mass% or more. On the other hand, if the content of cerium oxide is excessively high, basicity of the OSC material might be excessively high. For this reason, the content of cerium oxide is preferably 40 mass% or less, and more preferably 30 mass% or less.

As an example, the catalyst layer 30 includes the OSC material and the non-OSC material, and the catalytic metal is supported on both the OSC material and the non-OSC material.

The catalyst layer 30 may further contain the OSC material and/or the non-OSC material described above in the form of supporting no catalytic metal. The OSC material and the non-OSC material used as a carrier and the OSC material and the non-OSC material used as a non- carrier preferably contain no Si.

The amount of the OSC material and the non-OSC material in the exhaust gas purification catalyst 10 is not particularly limited, and may be appropriately designed in consideration of the size of the cells 12 of the base material 11, a flow rate of an exhaust gas distributed in the exhaust gas purification catalyst 10, and others. The total amount of the OSC material and the non-OSC material (total amount of the OSC material and the non-OSC material including both the carrier and the non-carrier) per 1 L of volume of the base material 11 may be, for example, 50 g/L or more, 70 g/L or more, 80 g/L or more, 90 g/L or more, or 100 g/L or more, and may be, for example, 300 g/L or less, 250 g/L or less, 200 g/L or less, 180 g/L or less, or 160 g/L or less.

The catalyst layer 30 preferably includes an OSC material as a carrier of the catalytic metal or in a form not supporting the catalytic metal. At this time, even when the air-fuel ratio of an exhaust gas varies depending on traveling conditions of a vehicle, and the like, high purification performance can be obtained with stability.

The catalyst layer 30 may include an alkaline earth element such as calcium (Ca) or barium (Ba). The alkaline earth element can suppress poisoning of the catalytic metal (especially oxidation catalyst). In addition, the alkaline earth element enhances dispersibility of the catalytic metal to thereby reduce sintering due to grain growth of the catalytic metal. In a case where the catalyst layer 30 includes an alkaline earth element together with the OSC material, the amount of oxygen absorption into the OSC material can be further increased in a lean condition (oxygen-rich atmosphere), where the fuel is leaner than the stoichiometric air-fuel ratio. The alkaline earth element can be included in a form of an oxide, a hydroxide, a carbonate, a nitrate, a sulfate, a phosphate, an acetate, a formate, an oxalate, a halide, or the like.

The catalyst layer 30 may include an NOx adsorbent having NOx storage capacity, a stabilizer, and the like. Examples of the stabilizer include rare-earth elements such as yttrium (Y), lanthanum (La), and neodymium (Nd). It should be noted that the rare-earth element can be present in the form of an oxide in the catalyst layer 30.

Examples of the other optional components of the catalyst layer 30 include binders such as alumina sol and silica sol, and various additives. The binder preferably includes no Si, and thus, alumina sol is preferable.

The catalyst layer 30 may include a NH₃ adsorbent, but since the exhaust gas purification catalyst 10 according to this embodiment includes the NH₃ adsorption layer 20, the catalyst layer 30 preferably includes no NH₃ adsorbent.

A coating amount (formation amount) of the catalyst layer 30 may be, but is not particularly limited to, approximately 30 g/L or more, typically 50 g/L or more, preferably 70 g/L or more, for example, 100 g/L or more, and may be approximately 500 g/L or less, typically 400 g/L or less, for example, 300 g/L or less, per 1 L of volume of the exhaust gas purification catalyst 10 (volume of the base material 11). When the coating amount satisfies the range described above, high levels of both enhancement of purification performance and reduction of a pressure loss can be obtained. It should be noted that the "coating amount" herein refers to a mass of a solid content included in a unit volume of the exhaust gas purification catalyst 10.

The length and thickness of the catalyst layer 30 can be appropriately designed in consideration of, for example, the size of the cells 12 of the base material 11 and a flow rate of an exhaust gas distributed in the exhaust gas purification catalyst 10. The catalyst layer 30 may be provided on the partitions 14 of the base material 11 continuously or intermittently. The catalyst layer 30 may be provided along the cylinder axis directions X from the inlet 10a of an exhaust gas or along the cylinder axis directions X from the outlet 10b of the exhaust gas, for example.

An entire coating width (average length) of the catalyst layer 30 along the cylinder axis directions X is, but not particularly limited to, approximately 20% or more, preferably 50% or more, typically 80% or more, for example, 90% or more of an overall length L of the base material 11, and may be equal to the overall length L of the base material 11. A coating thickness (average thickness) of the catalyst layer 30 is, but not particularly limited to, approximately 1 to 300 µm, typically 5 to 200 µm, and, for example, 10 to 100 µm. According to this, high levels of both enhancement of purification performance and reduction of a pressure loss can be obtained.

A portion of the catalyst layer 30 may have a composition different from that of another portion of the catalyst layer 30. For example, an upstream X1 portion (front portion) and a downstream X2 portion (rear portion) of the catalyst layer 30 in the cylinder axis directions X may have different compositions. Specifically, for example, the upstream X1 portion (front portion) and the downstream X2 portion (rear portion) of the catalyst layer 30 in the cylinder axis directions X may include different catalytic metals.

The exhaust gas purification catalyst 10 illustrated in FIG. 3 includes only the exhaust gas purification layer 40. Alternatively, the exhaust gas purification catalyst 10 may further include a layer other than the layer 40. For example, the exhaust gas purification catalyst 10 may include another layer (also referred to as an underlying layer) between the base material 11 and the exhaust gas purification layer 40 or may include another layer on the exhaust gas purification layer 40. The exhaust gas purification layer 40 may further include a layer concerning exhaust gas purification other than the NH₃ adsorption layer 20 and the catalyst layer 30.

The catalyst layer 30 of the exhaust gas purifying catalyst 10 illustrated in FIG. 3 has a single-layer structure. Alternatively, the catalyst layer 30 may have a multilayer structure in which each layer thereof contains a catalytic metal. An example of the exhaust gas purifying catalyst in the case where the catalyst layer 30 has a multilayer structure will be described below.

### <<Variation of Exhaust Gas Purification Catalyst 10>>

FIG. 4 is a partial cross-sectional view schematically illustrating a portion of a cross section of an exhaust gas purification catalyst 10' that is a variation of the exhaust gas purification catalyst 10, taken along the cylinder axis directions X. The exhaust gas purification catalyst 10' includes a base material 11 and an exhaust gas purification layer 40' located on the base material 11. The exhaust gas purification layer 40' includes a NH₃ adsorption layer 20, and a catalyst layer 30' having a multilayer structure. The NH₃ adsorption layer 20 and the catalyst layer 30' are stacked such that the NH₃ adsorption layer 20 is located closer to the base material 11 than the catalyst layer 30'. Since the catalyst layer 30' has the multilayer structure, exhaust gas purification performance can be further enhanced.

The base material 11 and the NH₃ adsorption layer 20 are the same as those described above. Unlike the example illustrated in FIG. 3, the catalyst layer 30' has the multilayer structure. Specifically, the catalyst layer 30' has a multilayer structure in which a first partial catalyst layer (lower layer) 31 and a second partial catalyst layer (upper layer) 32 are laminated in the thickness directions. Thus, the lower layer 31 is located on the side of the base material 11. In the illustrated example, the lower layer 31 is disposed to contact the surface of the NH₃ adsorption layer 20, and the upper layer 32 is disposed to contact the upper surface of the lower layer 31. In the illustrated example, the catalyst layer 30' has a double-layer structure, but the catalyst layer 30' may have a laminated structure of three or more layers. For example, the catalyst layer 30' may include an intermediate layer between the lower layer 31 and the upper layer 32, or the catalyst layer 30' may further include another layer on top of the upper layer 32.

Each of the lower layer 31 and the upper layer 32 includes a catalytic metal. Here, the lower layer 31 and the upper layer 32 may include the same catalytic metal or may include different catalytic metals, preferably include different catalytic metals.

Specifically, for example, the lower layer 31 includes an oxidation catalyst (e.g., at least one of Pd and Pt) as a catalytic metal, and the upper layer 32 includes a reduction catalyst (e.g., Rh) as a catalytic metal. In this case, the exhaust gas purification catalyst 10' exhibits especially high exhaust gas purification performance. From the viewpoint of higher exhaust gas purification performance, it is advantageous that the catalytic metal of the lower layer 31 is Pt and the catalytic metal of the upper layer 32 is Rh. This configuration is especially advantageous for purification of paraffin. Alternatively, from the viewpoint of higher exhaust gas purification performance, it is advantageous that the catalytic metal of the lower layer 31 is Pd and the catalytic metal of the upper layer 32 is Rh. This configuration is especially advantageous for purification of olefin.

In a case where the lower layer 31 includes Pt, preferably 80 mass% or more, more preferably 90 mass% or more, even more preferably 95 mass% or more, most preferably 100 mass% of the catalytic metal included in the lower layer 31 is Pt. In a case where the lower layer 31 includes Pd, preferably 80 mass% or more, more preferably 90 mass% or more, even more preferably 95 mass% or more, most preferably 100 mass% of the catalytic metal included in the lower layer 31 is Pd. In a case where the upper layer 32 includes Rh, preferably 80 mass% or more, more preferably 90 mass% or more, even more preferably 95 mass% or more, most preferably 100 mass% of the catalytic metal included in the upper layer 32 is Rh.

Each of the lower layer 31 and the upper layer 32 may include optional components that are the same as or similar to those of the catalyst layer 30 described above.

### <<Method for Producing Exhaust Gas Purification Catalyst 10>>

The exhaust gas purification catalyst 10 can be produced by, for example, the following method: First, a base material 11, a NH₃ adsorption layer slurry for forming a NH₃ adsorption layer 20, and a catalyst layer slurry for forming a catalyst layer 30 are prepared.

The NH₃ adsorption layer slurry can be prepared by, for example, mixing a MeAPO molecular sieve and other optional components (e.g., a non-OSC material, an OSC material, a binder, various additives, etc.) in a dispersion medium. The catalyst layer slurry can be prepared by, for example, mixing a catalytic metal source (e.g., solution including a catalytic metal as ions) and other optional components (e.g., a non-OSC material, an OSC material, a binder, various additives, etc.) in a dispersion medium. Examples of the dispersion medium include water and a mixture of water and a water-soluble organic solvent. Properties (e.g., viscosity, solid content, etc.) of these slurries can be appropriately determined depending on the size of the base material 11 to be used, the form of cells 12 (partitions 14), properties required for the NH₃ adsorption layer 20 and the catalyst layer 30, and so forth.

Next, with the NH₃ adsorption layer slurry, the NH₃ adsorption layer 20 is formed on the base material 11. The NH₃ adsorption layer 20 can be formed by a known method (e.g., impregnation, wash coating, etc.). Specifically, for example, the NH₃ adsorption layer slurry is allowed to flow into the cells 12 from an end portion of the base material 11 and supplied to a predetermined length along the cylinder axis directions X. The slurry may be allowed to flow from any one of the inlet 10a or the outlet 10b. In this case, excess slurry may be sucked from the opposite end. Alternatively, the excess slurry may be discharged from the cells 12 by, for example, sending air from the opposite end.

Thereafter, the base material 11 to which the slurry has been supplied is fired at a predetermined temperature for a predetermined time. The firing method may be the same as or similar to a conventional firing method. The dispersion medium may be removed by drying before the firing. By doing these, the NH₃ adsorption layer 20 can be formed on the base material 11.

Subsequently, with the catalyst layer slurry, the catalyst layer 30 is formed. The catalyst layer 30 can be formed by a known method (e.g., impregnation, wash coating, etc.). For example, in a manner similar to that described above, the catalyst layer slurry is allowed to flow into the cells 12 from an end portion of the base material 11 and supplied to a predetermined length along the cylinder axis directions X so that the catalyst layer slurry is applied onto the NH₃ adsorption layer 20 formed on the base material 11.

Then, the resulting product is fired at a predetermined temperature for a predetermined time. The firing method may be the same as or similar to a conventional firing method. The dispersion medium may be removed by drying before the firing. By doing these, the catalyst layer 30 can be formed on the NH₃ adsorption layer 20 formed on the base material 11. In the foregoing manner, the exhaust gas purification catalyst 10 can be obtained.

### [SECOND EMBODIMENT]

A second embodiment is different from the first embodiment in the structure of the exhaust gas purification layer of the exhaust gas purification catalyst. Therefore, this difference will be mainly described, and the description of the same aspects as those of the first embodiment will be basically omitted.

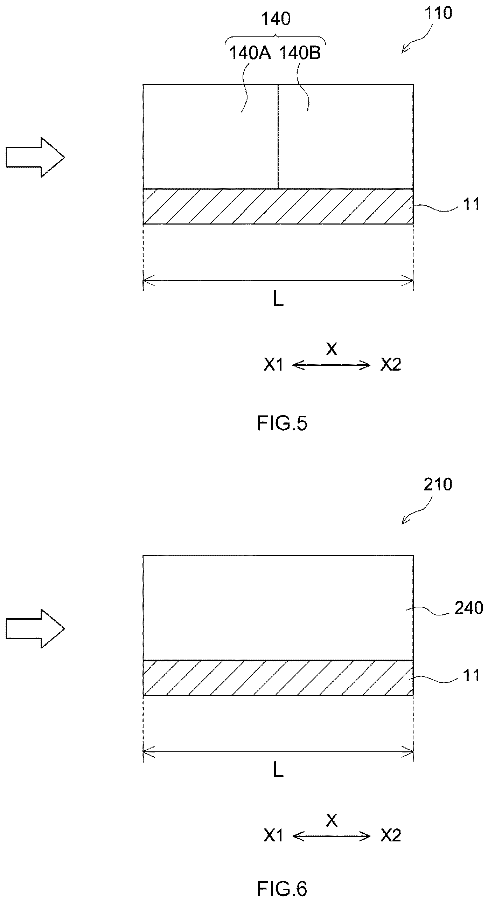

FIG. 5 is a partial cross-sectional view of an exhaust gas purification catalyst 110 according to a second embodiment taken along cylinder axis directions. As illustrated in FIG. 5, the exhaust gas purification catalyst 110 according to the second embodiment includes a base material 11 and an exhaust gas purification layer 140. The base material 11 used is the same as the base material of the first embodiment. The exhaust gas purification layer 140 includes a MeAPO molecular sieve and a catalytic metal. In the second embodiment, the exhaust gas purification layer 140 includes an upstream X1 portion (front portion) 140A and a downstream X2 portion (rear portion) 140B in the cylinder axis directions X. The front portion 140A is configured as a NH₃ adsorption layer including the MeAPO molecular sieve. The rear portion 140B is configured as a catalyst layer including the catalytic metal.

The composition of the NH₃ adsorption layer constituting the front portion 140A may be the same as that of the NH₃ adsorption layer 20 of the exhaust gas purification catalyst 10 according to the first embodiment. The composition of the catalyst layer constituting the rear portion 140B may be the same as that of the catalyst layer 30 of the exhaust gas purification catalyst 10 according to the first embodiment.

The amounts of the catalytic metal, the MeAPO molecular sieve, an OSC material, and a non-OSC material in the exhaust gas purification catalyst 110 are not particularly limited, and may be equal to the amounts in the exhaust gas purification catalyst 10 according to the first embodiment.

The ratio of the coating width (average length) of the front portion 140A and the rear portion 140B in the cylinder axis directions X is not particularly limited, and is, for example, 5:95 to 90:10, preferably 10:90 to 80:20, more preferably 20:80 to 70:30.

Each of the front portion 140A and the rear portion 140B has a single-layer structure but may have a multilayer structure. For example, the rear portion 140B may have a multilayer structure including the upper layer on a surface side and a lower layer on a base material side, and the upper layer and the lower layer may include different types of catalytic metals.

Specifically, for example, the rear portion 140B has a multilayer structure including an upper layer on the surface side and a lower layer on the base material side, the upper layer includes a reduction catalyst (e.g., Rh) as a catalytic metal, and the lower layer includes an oxidation catalyst (e.g., at least one of Pd and Pt) as a catalytic metal. In this case, the exhaust gas purification catalyst 110 shows especially high exhaust gas purification performance.

It should be noted that in the exhaust gas purification layer 140, the front portion 140A can be configured as a catalyst layer, and the rear portion 140B can be configured as a NH₃ adsorption layer. However, in the case where the front portion 140A can be configured as a NH₃ adsorption layer and the rear portion 140B can be configured as a catalyst layer as described above, NH₃ adsorbed by the front portion 140A is purified by the rear portion 140B when being desorbed from the front portion 140A, and thus, this configuration is especially advantageous in NH₃ purification efficiency.

In the illustrated example, the front portion 140A and the rear portion 140B are in contact with each other, but may be separated from each other. Further, for reasons related to manufacturing, and the like an end portion of the front portion 140A on the X2 side and an end portion of the rear portion 140B on the X1 side may partially overlap each other.

A coating amount (formation amount) of the exhaust gas purification layer 140 may be, but is not particularly limited to, approximately 30 g/L or more, typically 50 g/L or more, preferably 70 g/L or more, for example, 100 g/L or more, and may be approximately 500 g/L or less, typically 400 g/L or less, for example, 300 g/L or less, per 1 L of volume of the exhaust gas purification catalyst 110 (volume of the base material 11). When the coating amount satisfies the range described above, high levels of both enhancement of purification performance and reduction of a pressure loss can be obtained. It should be noted that the "coating amount" herein refers to a mass of a solid content included in a unit volume of the exhaust gas purification catalyst 10.

An entire coating width (average length) of the exhaust gas purification layer 140 along the cylinder axis directions X is, but not particularly limited to, approximately 20% or more, preferably 50% or more, typically 80% or more, for example, 90% or more of an overall length L of the base material 11, and may be equal to the overall length L of the base material 11. A coating thickness (average thickness) of the exhaust gas purification layer 140 is, but not particularly limited to, approximately 1 to 300 µm, typically 5 to 200 µm, and, for example, 10 to 100 µm. According to this, high levels of both enhancement of purification performance and reduction of a pressure loss can be obtained.

The exhaust gas purification catalyst 110 according to the second embodiment can be produced by, for example, the following method. First, similarly to the first embodiment, a base material 11, a NH₃ adsorption layer slurry, and a catalyst layer slurry are prepared.

The NH₃ adsorption layer slurry is poured from an exhaust gas inflow end of the base material 11 to a predetermined position, and dried. The catalyst layer slurry is poured from an exhaust gas outflow end of the base material 11 to a predetermined position, and dried. Thereafter, firing is performed, thereby forming an exhaust gas purification layer 140 including a front portion constituted by a NH₃ adsorption layer and a rear portion constituted by a catalyst layer, on the base material 11. In this manner, an exhaust gas purification catalyst 110 can be obtained.

### [THIRD EMBODIMENT]

A third embodiment is different from the first embodiment in the structure of the exhaust gas purification layer of the exhaust gas purification catalyst. Therefore, this difference will be mainly described, and the description of the same aspects as those of the first embodiment will be basically omitted.

FIG. 6 is a partial cross-sectional view of an exhaust gas purification catalyst 210 according to the third embodiment taken along cylinder axis directions. As illustrated in FIG. 6, the exhaust gas purification catalyst 210 according to the third embodiment includes a base material 11 and an exhaust gas purification layer 240. The base material 11 used is the same as the base material of the first embodiment. The exhaust gas purification layer 240 includes a MeAPO molecular sieve and a catalytic metal. In the third embodiment, the MeAPO molecular sieve and the catalytic metal are mixed and included in one layer.

In the exhaust gas purification layer 240, the catalytic metal may be supported on the MeAPO molecular sieve or may be supported by a carrier. Thus, the exhaust gas purification layer 240 may further include a carrier that supports a catalytic metal. The catalytic metal may be supported on one or both of the MeAPO molecular sieve and the carrier. Examples of the carrier include the OSC material described above and the non-OSC material described above.

As an example, the exhaust gas purification layer 240 includes a catalytic metal, a MeAPO molecular sieve, an OSC material, and a non-OSC material, and the catalytic metal is supported on all of the MeAPO molecular sieve, the OSC material, and the non-OSC material. As another example, the exhaust gas purification layer 240 includes a catalytic metal, a MeAPO molecular sieve, an OSC material, and a non-OSC material, and the catalytic metal is supported on the non-OSC material. As yet another example, the exhaust gas purification layer 240 includes a catalytic metal, a MeAPO molecular sieve, an OSC material, and a non-OSC material, and the catalytic metal is supported on the OSC material and the non-OSC material.

The exhaust gas purification layer 240 may include, for example, an alkaline earth element, a NOx adsorbent, a stabilizer, a binder, various additives, and a NH₃ adsorbent other than the MeAPO molecular sieve, as optional components. The binder preferably does not contain Si, and thus, is preferably alumina sol.

The amounts of the catalytic metal, the MeAPO molecular sieve, the OSC material, and the non-OSC material in the exhaust gas purification catalyst 210 are not particularly limited, and may be equal to the amounts in the exhaust gas purification catalyst 10 according to the first embodiment.

A coating amount (formation amount) of the exhaust gas purification layer 240 may be, but is not particularly limited to, approximately 30 g/L or more, typically 50 g/L or more, preferably 70 g/L or more, for example, 100 g/L or more, and may be approximately 500 g/L or less, typically 400 g/L or less, for example, 300 g/L or less, per 1 L of volume of the exhaust gas purification catalyst 10 (volume of the base material 11). When the coating amount satisfies the range described above, high levels of both enhancement of purification performance and reduction of a pressure loss can be obtained. It should be noted that the "coating amount" herein refers to a mass of a solid content included in a unit volume of the exhaust gas purification catalyst 10.

An entire coating width (average length) of the exhaust gas purification layer 240 along the cylinder axis directions X is, but not particularly limited to, approximately 20% or more, preferably 50% or more, typically 80% or more, for example, 90% or more of an overall length L of the base material 11, and may be equal to the overall length L of the base material 11. A coating thickness (average thickness) of the exhaust gas purification layer 240 is, but not particularly limited to, approximately 1 to 300 µm, typically 5 to 200 µm, and, for example, 10 to 100 µm. According to this, high levels of both enhancement of purification performance and reduction of a pressure loss can be obtained.

A portion of the exhaust gas purification layer 240 may have a composition different from the other portion of the exhaust gas purification layer 240. For example, an upstream X1 portion (front portion) and a downstream X2 portion (rear portion) of the exhaust gas purification layer 240 in the cylinder axis directions X may have different compositions. Specifically, for example, the upstream X1 portion (front portion) and the downstream X2 portion (rear portion) of the exhaust gas purification layer 240 in the cylinder axis directions X may include different types of catalytic metals or may include different types of MeAPO molecular sieves.

In the illustrated example, the exhaust gas purification layer 240 has a single-layer structure, but may have a multilayer structure. For example, the exhaust gas purification layer 240 may have a multilayer structure including an upper layer on the surface side and a lower layer on the base material side, and each of the upper layer and the lower layer may include a MeAPO molecular sieve and a catalytic metal. In this case, the upper layer and the lower layer may include different types of catalytic metals or may include different types of MeAPO molecular sieves.

Specifically, for example, the exhaust gas purification layer 240 has a multilayer structure including an upper layer on the surface side and a lower layer on the base material side, the upper layer includes a MeAPO molecular sieve and a reduction catalyst (e.g., Rh) as a catalytic metal, and the lower layer includes a MeAPO molecular sieve and an oxidation catalyst (e.g., at least one of Pd and Pt) as a catalytic metal. In this case, the exhaust gas purification catalyst 210 shows especially high exhaust gas purification performance.

The exhaust gas purification catalyst 210 according to the third embodiment can be produced by, for example, the following method. First, a base material 11, and an exhaust gas purification layer slurry for forming an exhaust gas purification layer 240 are prepared. The exhaust gas purification layer slurry can be prepared by, for example, mixing a catalytic metal source (e.g., solution including a catalytic metal as ions), a MeAPO molecular sieve, and other optional components (e.g., a non-OSC material, an OSC material, a binder, various additives, etc.) in a dispersion medium.

Then, the exhaust gas purification layer slurry is applied to the base material 11 by a known method, dried as necessary, and then fired. In this manner, an exhaust gas purification layer 240 is formed on the base material 11, thereby obtaining an exhaust gas purification catalyst 210.

### <<Application of Exhaust Gas Purification Catalyst 10, 110, 210>>

The exhaust gas purification catalyst 10, 110, 210 is suitably used for purifying an exhaust gas emitted from internal combustion engines of, in addition to vehicles such as an automobile and a truck, a motorcycle, and a bicycle with a motor; marine products such as a vessel, a tanker, a water bike, a personal watercraft, and an outboard motor; garden products such as a mowing machine, a chain saw, and a trimmer; leisure products such as a golf cart and a four-wheeled buggy; generator sets such as a cogeneration system; an incinerator, and the like. Among these, the catalyst 10 is suitably applicable to vehicles such as automobiles, and particularly suitably applicable to vehicles including gasoline engines. It should be noted that the "gasoline engine" herein is an engine that uses gasoline as fuel and burns an air-fuel mixture with an air-fuel ratio ranging from rich to lean, including the stoichiometric air-fuel ratio (air:gasoline = 14.7:1), but does not include lean-burn engines.

In the case of using the exhaust gas purification catalyst 10, 110, 210 for purification of an exhaust gas from a gasoline engine, it is preferable that in a catalyst unit including a first catalyst and a second catalyst located downstream of the first catalyst in a flow direction of the exhaust gas, a catalyst containing a three-way catalyst is used as the first catalyst and the exhaust gas purification catalyst 10, 110, 210 is used as the second catalyst. In this case, NH₃ generated by over-reduction in the first catalyst can be efficiently purified by the exhaust gas purification catalyst 10, 110, 210, and NH₃ emission can be significantly reduced. The first catalyst typically includes a base material and a catalyst layer. The base material may be the same as or similar to the base material 11 in the first embodiment, and the catalyst layer may be the same as or similar to the catalyst layer 30 in the first embodiment.

Test examples of the present invention will be described below, but are not intended to limit the present invention.

### [Example 1]

As a base material, a honeycomb base material (made of cordierite, volume: 0.0175 L, overall length of base material: 24 mm, the number of cells: 400 cells, cell shape: quadrangle, partition thickness: 6 mil) was prepared. As an NH₃ adsorbent, AFI type ALPO whose framework was substituted by Zn (hereinafter also referred to as "ZnAPO-5") was prepared. In ZnAPO-5, the atomic ratio represented by Zn/(Al + P) was 0.0039. As materials for an exhaust gas purification layer, the following materials were prepared.
Non-OSC material: Al₂O₃ doped with La₂O₃, La₂O₃ content: 1 to 10 mass%
OSC material: CeO₂-ZrO₂-based composite oxide, CeO₂ content: 15 to 40 mass%, supplemented with trace amounts of Pr₂O₃, Nd₂O₃, La₂O₃, and Y₂O₃ and processed to have high heat resistance

The NH₃ adsorbent (i.e., ZnAPO-5), an Al₂O₃-based binder, and a water medium were mixed, thereby preparing a NH₃ adsorption layer slurry. This slurry was poured into the base material, and an unnecessary portion was blown out by a blower, thereby coating a surface of the base material with a material for forming a NH₃ adsorption layer. The resulting product was fired in an electric furnace at 500°C for one hour. In this manner, a NH₃ adsorption layer was formed on the base material.

A nitric acid-based Pt aqueous solution, the La₂O₃-compounded Al₂O₃ described above, the CeO₂-ZrO₂-based composite oxide described above, barium sulfate, an Al₂O₃-based binder, and a water medium were mixed, thereby preparing a lower catalyst layer slurry. This slurry was poured into the base material on which the NH₃ adsorption layer had been formed, and an unnecessary portion was blown out by a blower, thereby coating the NH₃ adsorption layer with a material for forming a lower catalyst layer. Then, the resulting product was fired in an electric furnace at 500°C for one hour. In this manner, a lower catalyst layer including a Pt catalyst was formed on the base material.

Next, a rhodium nitrate aqueous solution, the La₂O₃-compounded Al₂O₃ described above, the CeO₂-ZrO₂-based composite oxide described above, an Al₂O₃-based binder, and a water medium were mixed, thereby preparing an upper catalyst layer slurry. This slurry was poured into the base material on which the lower catalyst layer had been formed and an unnecessary portion was blown out by a blower, thereby coating a surface of the lower catalyst layer with a material for forming an upper catalyst layer. Then, the resulting product was fired in an electric furnace at 500°C for one hour. Thereby, an upper catalyst layer including a Rh catalyst was formed on the lower catalyst layer. In this manner, an exhaust gas purification catalyst of Example 1 including, on a base material, an exhaust gas purification layer constituted by a NH₃ adsorption layer, a Pt-containing lower catalyst layer, and a Rh-containing upper catalyst layer was obtained. In the obtained exhaust gas purification catalyst, a Pt content was 0.3 g/L, a Rh content was 0.06 g/L, a content of a carrier (non-OSC material + OSC material) was 150 g/L, and a content of a NH₃ adsorbent was 108 g/L, per 1 L of volume of the base material.

### [Example 2]

An exhaust gas purification catalyst of Example 2 was produced in the same manner as Example 1 except for using AFI type ALPO whose framework was substituted by Zr (hereinafter also referred to as "ZrAPO-5") as a NH₃ adsorbent, instead of ZnAPO-5. It should be noted that in ZrAPO-5, the atomic ratio represented by Zr/(Al + P) was 0.011.

### [Example 3]

An exhaust gas purification catalyst of Example 3 was produced in the same manner as Example 1 except for using AFI type ALPO whose framework was substituted by Co (hereinafter also referred to as "CoAPO-5") as a NH₃ adsorbent, instead of ZnAPO-5. It should be noted that in CoAPO-5, the atomic ratio represented by Co/(Al + P) was 0.0227.

### [Example 4]

An exhaust gas purification catalyst of Example 4 was produced in the same manner as Example 1 except for using AFI type ALPO whose framework was substituted by Ti (hereinafter also referred to as "TAPO-5") as a NH₃ adsorbent, instead of ZnAPO-5. It should be noted that in TAPO-5, the atomic ratio represented by Ti/(Al + P) was 0.0013.

### [Comparative Example 1]

An exhaust gas purification catalyst of Comparative Example 1 was produced in the same manner as Example 1 except for forming no NH₃ adsorption layer without using a NH₃ adsorption layer slurry.

### [Comparative Example 2]

An exhaust gas purification catalyst of Comparative Example 2 was produced in the same manner as Example 1 except for using BEA type zeolite (SiO₂/Al₂O₃ ratio = 500) as a NH₃ adsorbent, instead of ZnAPO-5.

### [Comparative Example 3]

An exhaust gas purification catalyst of Comparative Example 3 was produced in the same manner as Example 1 except for using AFI type ALPO-5 as a NH₃ adsorbent, instead of ZnAPO-5.

### [Hydrothermal Endurance Treatment]

To the exhaust gas purification catalysts of the examples and the comparative examples, a rich gas and a lean gas were alternately distributed at 900°C for 10 hours while switching the gas every 10 minutes. The composition of the rich gas was CO: 5%, water: 10%, and N₂: balance, and the composition of the lean gas was O₂: 2.5%, water: 10%, and N₂: balance.

### [Catalyst Activity Evaluation on NH₃]

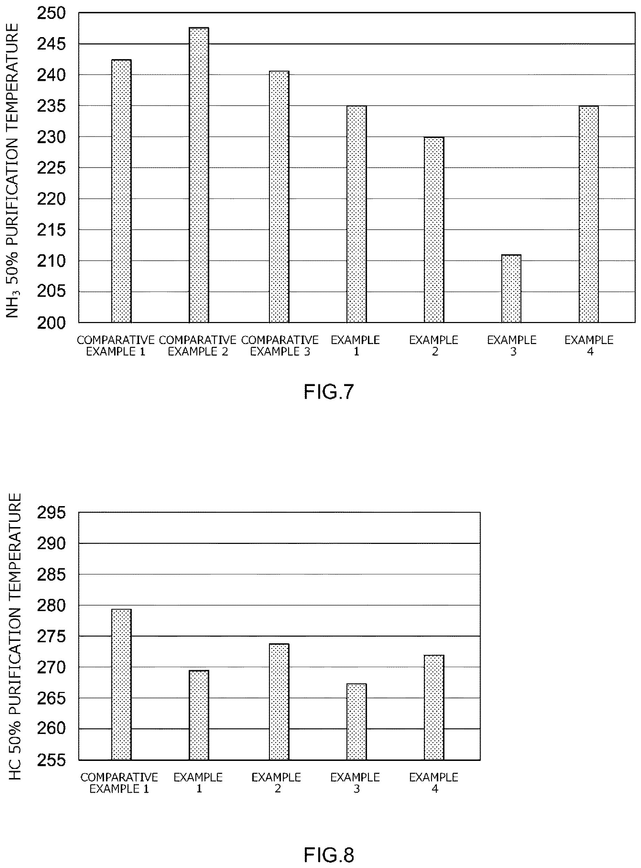

While a pretreatment gas A was distributed to the exhaust gas purification catalysts of the examples and the comparative examples subjected to the hydrothermal endurance treatment described above, the temperature was raised from 100°C to 500°C at 20°C/min. and the catalysts were held at 500°C for five minutes. Next, the temperature was lowered to 100°C while an inert gas (N₂ gas) was distributed. After the temperature was stabilized, the temperature was raised to 650°C at 50°C/min. while a reactant gas A was distributed, thereby determining a temperature at which a NH₃ purification efficiency of the reactant gas reached 50% (NH₃ 50% purification temperature: T50). It should be noted that as the pretreatment gas A and the reactant gas A, the following gasses were used. FIG. 7 shows a graph of NH₃ 50% purification temperatures of the examples and the comparative examples.
Pretreatment gas A
A/F rate: 14.6
C₃H₆: 2400 ppmC, C₃H₈: 600 ppmC, CO: 0.5%
NO: 800 ppm, H₂O: 10%, CO₂: 10%, O₂: 0.6%, N₂: balance
Reactant gas A
NH₃: 500 ppm, H₂O: 3%, CO₂: 10%, O₂: 0.1%, N₂: balance

As show in the graph of FIG. 7, as compared to Comparative Example 1 using no NH₃ adsorbent, Comparative Example 2 using zeolite, and Comparative Example 3 using ALPO, Examples 1 through 4 each using MeALPO as a NH₃ adsorbent of a NH₃ adsorption layer showed low NH₃ 50% purification temperatures after hydrothermal endurance and high NH₃ purification performance even at low temperatures. Therefore, in the exhaust gas purification catalyst disclosed here can provide an exhaust gas purification catalyst showing high NH₃ purification performance at cold start after hydrothermal endurance.

Comparison of Examples 1 through 4 shows that regarding the types of framework substitution metals, NH₃ purification performances were higher in the order of Co > Zr > Ti > Zn.

### [Catalyst Activity Evaluation on HC]

While the pretreatment gas A described above was distributed to the exhaust gas purification catalysts of Examples and Comparative Example 1 subjected to the hydrothermal endurance treatment, the temperature was raised from 100°C to 500°C at 20°C/min. and the catalysts were held at 500°C for five minutes. Next, the temperature was lowered to 100°C while an inert gas (N₂ gas) was distributed. After the temperature was stabilized, the temperature was raised to 550°C at 50°C/min. while a reactant gas B was distributed, thereby determining a temperature at which a HC purification efficiency of the reactant gas reached 50% (HC 50% purification temperature: T50). It should be noted that as the reactant gas B, the following gas was used. FIG. 8 shows a graph of HC 50% purification temperatures of Examples and Comparative Example 1.
Reactant gas B
A/F rate: 14.5;
C₃H₆: 1500 ppmC, C₁₀H₂₂: 1500 ppmC, H₂O: 3%,
CO₂: 10%, O₂: 0.3%, N₂: balance

The graph of FIG. 8 shows that the MeALPO molecular sieve also functions as a HC adsorbent, and the exhaust gas purification catalyst disclosed here also shows high HC purification performance at cold start after hydrothermal endurance. Comparison of Examples 1 through 4 shows that regarding the types of framework substitution metals, HC purification performances were higher in the order of Co > Zn > Ti > Zr.

Some embodiments of the present invention have been described, in the above, but the embodiments are merely examples. The present invention can be carried out in other various modes. The present invention can be carried out on the basis of the contents disclosed in the description and common general knowledge in the field. The techniques described in claims include various modifications and changes of the above exemplified embodiments. For example, the embodiments described above may be partially replaced with another embodiment, and another modified embodiment may be added to the embodiments described above. It may also be removed as appropriate if the technical features of the embodiments are not described as essential.

## Claims

1. An exhaust gas purification catalyst comprising:
a base material; and
an exhaust gas purification layer located on the base material, wherein
the exhaust gas purification layer includes a molecular sieve containing substantially no Si, and a catalytic metal, and
the molecular sieve containing substantially no Si is metalloaluminophosphate whose framework is partially substituted by a metal other than Al.

2. The exhaust gas purification catalyst according to claim 1, wherein the metal substituting the framework of the metalloaluminophosphate is at least one selected from the group consisting of Zr, Zn, Co, and Ti.

3. The exhaust gas purification catalyst according to claim 1, wherein the metal substituting the framework of the metalloaluminophosphate is Co.

4. The exhaust gas purification catalyst according to claim 1, wherein the exhaust gas purification layer includes a NH₃ adsorption layer including the molecular sieve containing substantially no Si, and a catalyst layer including the catalytic metal.

5. The exhaust gas purification catalyst according to claim 4, wherein
the NH₃ adsorption layer and the catalyst layer are stacked, and
the NH₃ adsorption layer is located closer to the base material than the catalyst layer.

6. The exhaust gas purification catalyst according to claim 4, wherein
the exhaust gas purification layer includes a front portion, and a rear portion located downstream of the front portion in a flow direction of an exhaust gas,
the NH₃ adsorption layer constitutes the front portion, and
the catalyst layer constitutes the rear portion.

7. The exhaust gas purification catalyst according to claim 1, wherein the exhaust gas purification catalyst is used for purifying an exhaust gas of a gasoline engine.
